(19) Europäisches Patentamt
European Patent Office
Office européen des brevets

(11) **EP 3 213 038 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **15762976.7**

(22) Anmeldetag: **10.09.2015**

(51) Int Cl.:
***G01D 5/20*** *(2006.01)*

(86) Internationale Anmeldenummer:
**PCT/EP2015/070719**

(87) Internationale Veröffentlichungsnummer:
**WO 2016/066313 (06.05.2016 Gazette 2016/18)**

(54) **POSITIONSGEBER, POSITIONSMESSEINRICHTUNG UND BETRIEBSVERFAHREN HIERFÜR**

ENCODER, POSITION MEASURING DEVICE AND OPERATION METHOD THEREOF

CODEUR, DISPOSITIF DE MESURE DE POSITION ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2014 DE 102014221967**

(43) Veröffentlichungstag der Anmeldung:
**06.09.2017 Patentblatt 2017/36**

(73) Patentinhaber: **Horst Siedle GmbH & Co. KG.**
**78120 Furtwangen (DE)**

(72) Erfinder:
• **HUBRICH, Stefan**
**70794 Filderstadt (DE)**
• **DINGLER, Peter**
**73432 Aalen-Ebnat (DE)**
• **OEGUET, Berkan**
**70178 Stuttgart (DE)**
• **SCHNELL, Joachim**
**73235 Weilheim/Teck (DE)**

(74) Vertreter: **DREISS Patentanwälte PartG mbB**
**Friedrichstraße 6**
**70174 Stuttgart (DE)**

(56) Entgegenhaltungen:
EP-A2- 0 658 745    EP-A2- 0 743 508
DE-A1-102007 017 549    DE-T2- 69 502 283
US-A1- 2004 227 644

## Beschreibung

Die Erfindung betrifft einen Positionsgeber für eine elektronische Positionsmesseinrichtung. Die Erfindung betrifft ferner eine elektronische Positionsmesseinrichtung.

Weiterhin betrifft die Erfindung ein Betriebsverfahren für einen derartigen Positionsgeber und ein Betriebsverfahren für eine derartige Positionsmesseinrichtung.

Aus der EP 1 442 273 B1 ist ein Sensorgerät zur Positionsmessung bekannt, das zur Verwendung eines passiven Positionsgebers ausgebildet ist. Der passive Positionsgeber weist einen Resonanzkreis auf, der durch ein Sendesignal des herkömmlichen Sensorgeräts angeregt wird und dessen Ausgangssignal in Empfangsspulen des bekannten Sensorgeräts einkoppelbar ist. Das konventionelle Sensorgerät weist eine verhältnismäßig geringe Dynamik und eine verhältnismäßig geringe Auflösung bei der Positionsmessung auf. EP 0 743 508 A2 beschreibt einen Positionsgeber basierend auf dem Induktionsprinzip. DE 695 02 283 T2 beschreibt einen Weggeber für Aufzüge. EP 0 658 745 A2 beschreibt einen Positionsdetektor mit einem Energiespeicher, der bei Annäherung eines Körpers einen Teil der Bewegungsenergie des Körpers in Form potentieller Energie ansammelt und speichert und beim Erreichen der Position die gespeicherte potentielle Energie in Form kinetischer Energie schlagartig freisetzt.

Aufgabe der vorliegenden Erfindung ist es, einen verbesserten Positionsgeber und eine verbesserte Positionsmesseinrichtung sowie verbesserte entsprechende Betriebsverfahren hierfür anzugeben.

Betreffend den Positionsgeber löst die Erfindung diese Aufgabe durch die Merkmalskombination gemäß Patentanspruch 1.

Der erfindungsgemäße Positionsgeber weist u.a. eine Signalerzeugungseinrichtung zur Erzeugung eines periodischen magnetischen Signals und eine elektrische Energieversorgungseinrichtung zur Versorgung der Signalerzeugungseinrichtung mit elektrischer Energie auf, und stellt somit einen - im Gegensatz zu dem eingangs erwähnten konventionellen System - aktiven Positionsgeber dar. Der erfindungsgemäße aktive Positionsgeber ermöglicht vorteilhaft die Erzeugung verhältnismäßig starker magnetischer Signale zur Einkopplung in ein oder mehrere Messschleifen einer Positionsmesseinrichtung, wodurch bei realen Systemen vorhandene Störeinflüsse wie bspw. Störeinstrahlungen bzw. Rauschen einen im Gegensatz zu den konventionellen Systemen verminderten Einfluss haben, was sich vorteilhaft auf die Empfindlichkeit der Positionsmessung auswirkt und eine höhere Positionsauflösung ermöglicht. Insbesondere ergibt sich durch das erfindungsgemäße Prinzip vorteilhaft auch die Vermeidung von Signalüberkopplungen, wie sie bei den konventionellen Systemen auftritt.

Ebenso wird durch die erfindungsgemäße Konfiguration eine größere Dynamik eines den Positionsgeber aufweisenden Gesamtsystems erzielt, so dass eine Ermittlung von Positionen schneller als bei konventionellen Systemen ermöglicht, mithin eine höhere Erfassungsrate realisierbar ist.

Bevorzugt weist die elektrische Energieversorgungseinrichtung mindestens einen lokalen Energiespeicher auf. Bevorzugt handelt es sich bei dem Energiespeicher um einen Kondensator. Alternativ oder ergänzend können auch ein oder mehrere Batterien bzw. Akkumulatoren vorgesehen sein. Besonders vorteilhaft ist der mindestens ein Energiespeicher lokal an dem Positionsgeber angeordnet, so dass er mit diesem mitbewegt wird.

Besonders vorteilhaft ist der Energiespeicher der elektrischen Energieversorgungseinrichtung lokal an dem Positionsgeber angeordnet (also mit diesem mitbewegbar) und dazu ausgebildet, elektrische Energie in Form einer Gleichspannung zu speichern. Dies ist sowohl bei dem Einsatz von Kondensatoren als auch von Batterien bzw. Akkumulatoren denkbar.

Bei einer weiteren bevorzugten Ausführungsform weist der Energiespeicher wenigstens einen Kondensator mit einer Kapazität von 1 nF (Nanofarad) oder mehr auf, insbesondere von 10 nF oder mehr, weiter insbesondere von 100 nF oder mehr.

Bei einer weiteren bevorzugten Ausführungsform weist der Energiespeicher wenigstens einen Akkumulator oder eine Batterie mit einer Kapazität von 10 mAh (Milliamperestunden) oder mehr auf, insbesondere von 100 mAh oder mehr, weiter insbesondere von 500 mAh oder mehr.

Bei anderen Beispielen kann jedoch auch in Betracht kommen, den Energiespeicher nicht lokal an bzw. in dem Positionsgeber vorzusehen, sondern ihn mittels einer elektrischen Leitungsverbindung, bspw. nach Art von Schleppkabeln und/oder eines Schleifkontakts, anzubinden, wodurch sich die Masse des Positionsgebers selbst verringert.

Weiter vorteilhaft weist die elektrische Energieversorgungseinrichtung einen Energiewandler auf, der eine Empfangsspule zur Aufnahme von Energie aus einem Induktionsfeld aufweist, wodurch vielfältige Möglichkeiten zur Energieversorgung des aktiven Positionsgebers angegeben sind. Insbesondere kann einer Ausführungsform zufolge dadurch auch das Prinzip des "energy harvesting" umgesetzt werden, wobei der Positionsgeber die für seinen Betrieb erforderliche Energie aus seiner Umgebung bezieht, insbesondere aus z.B. ohnehin vorhandenen elektromagnetischen Feldern, Solarstrahlung, Umgebungslicht, mechanischen Schwingungen eines den Positionsgeber enthaltenden Zielsystems, usw.

Besonders vorteilhaft ist eine induktive Versorgung des Positionsgebers mit elektrischer Energie möglich, wobei bspw. eine dem Positionsgeber zugeordnete Positionsmesseinrichtung über mindestens eine entsprechende Induktionsspule zur Erzeugung des Induktionsfeldes verfügt. Bei dieser Ausführungsform kann der Positionsgeber, der die Empfangsspule zur Aufnahme von Energie aus dem Induktionsfeld aufweist, die in der Empfangsspule induzierte Spannung bspw. zum Aufladen des (lokalen) Energiespeichers des Positionsgebers verwenden. Besonders bevorzugt ist der Energiewandler des Positionsgebers einer Ausführungsform zufolge dazu ausgelegt, Energie aus einem Induktionsfeld einer Frequenz von etwa 1 MHz bis etwa 4 MHz zu beziehen.

Weiter weist die elektrische Energieversorgungseinrichtung wenigstens einen Gleichrichter zum Aufladen des Energiespeichers unter Verwendung einer Gleichspannung auf. Die durch den Gleichrichter erzeugte Gleichspannung wird also zum Aufladen des Energiespeichers genutzt. Die beispielsweise aus dem vorstehend beschriebenen Induktionsfeld bei einer Frequenz von z.B. etwa 1 MHz bis etwa 4 MHz erhaltene Energie kann sodann lokal auf dem Positionsgeber gleichgerichtet und dazu verwendet werden, einen ebenfalls lokal auf dem Positionsgeber angeordneten Energiespeicher wie z.B. einen Akkumulator oder Kondensator aufzuladen.

Weiter vorteilhaft weist die Signalerzeugungseinrichtung wenigstens einen aktiven Oszillator auf. Dadurch ist vorteilhaft die Möglichkeit gegeben, aktiv in dem Positionsgeber das periodische magnetische Signal zu erzeugen, welches bei einer zugeordneten Positionsmesseinrichtung zur Ermittlung der Position des Positionsgebers nutzbar ist. Beispielsweise kann eine als Sender vorgesehene Magnetspule der Signalerzeugungseinrichtung direkt mit dem Ausgangssignal des Oszillators beaufschlagt werden. Alternativ kann das Ausgangssignal des Oszillators zunächst verstärkt werden, und die Magnetspule wird sodann mit dem verstärkten Ausgangssignal des Oszillators beaufschlagt, um das periodische magnetische Signal zu erzeugen. Unter einem "aktiven" Oszillator wird vorliegend ein Oszillator verstanden, der zur Energieversorgung eine elektrische Gleichspannung als Eingangsspannung erhält, und der aktiv ein Wechselsignal als Ausgangssignal erzeugt.

Bei einer weiteren Ausführungsform kann die Signalerzeugungseinrichtung auch mehrere Magnetspulen aufweisen.

Bei einer weiteren vorteilhaften Ausführungsform ist vorgesehen, dass das periodische magnetische Signal eine Frequenzkomponente im Bereich von etwa 1 kHz (Kilohertz) bis etwa 200 kHz aufweist, insbesondere im Bereich von etwa 10 kHz bis etwa 20 kHz. Besonders bevorzugt weist das von dem Positionsgeber bzw. seiner Signalerzeugungseinrichtung erzeugte periodische Signal genau eine Frequenzkomponente in dem vorstehend bezeichneten Frequenzbereich auf, wodurch eine besonders präzise Positionsmessung ermöglicht ist. Die Vorsehung von Signalen im kHz-Bereich ermöglicht darüber hinaus eine besonders einfache und effiziente Auswertung im Gegensatz zu bekannten Systemen, welche mit höheren Frequenzen arbeiten. Bei weiteren bevorzugten Ausführungsformen ist der Energiewandler dazu ausgebildet, Energie aus einem Induktionsfeld mit einer Frequenz von etwa 1 MHz bis etwa 4 MHz zu beziehen. Durch die Verwendung der Frequenz von etwa 1 MHz bis etwa 4 MHz für die induktive elektrische Energieversorgung des Positionsgebers wird besonders vorteilhaft eine Positionsmessung, die auf der Auswertung des periodischen magnetischen Signals beruht, das bevorzugt eine Frequenzkomponente im Bereich von etwa 1 kHz (Kilohertz) bis etwa 200 kHz aufweist, also in einem ganz anderen Frequenzbereich arbeitet, nicht beeinflusst.

Eine weitere Lösung der Aufgabe der vorliegenden Erfindung ist durch eine Positionsmesseinrichtung gemäß Patentanspruch 6 angegeben.

Die erfindungsgemäße Positionsmesseinrichtung ist vorgesehen zur Ermittlung einer Position eines entlang eines Messweges bewegbaren Positionsgebers, wobei der Positionsgeber gemäß der vorliegenden Erfindung ausgebildet ist. Die erfindungsgemäße Positionsmesseinrichtung weist mindestens eine erste entlang des Messweges angeordnete Leiterschleife zur Erfassung eines von dem Positionsgeber erzeugten magnetischen Signals auf, wobei die erste Leiterschleife so ausgebildet ist, dass sich eine magnetische Kopplung zwischen einer bzw. der Signalerzeugungseinrichtung des Positionsgebers und der ersten Leiterschleife in Abhängigkeit der Position des Positionsgebers ändert. Ferner weist die erfindungsgemäße Positionsmesseinrichtung eine Auswerteeinrichtung auf, die zur Ermittlung der Position in Abhängigkeit eines durch das magnetische Signal in der ersten Leiterschleife erzeugten ersten (elektrischen) Signals ausgebildet ist. Ferner weist die erfindungsgemäße Positionsmesseinrichtung wenigstens eine Induktionsspule zur Erzeugung des Induktionsfelds für den Positionsgeber auf.

Die Verwendung des erfindungsgemäßen aktiven Positionsgebers für die erfindungsgemäße Positionsmesseinrichtung bedingt den Vorteil, dass das in der ersten Leiterschleife erzeugte erste Signal eine verhältnismäßig große Amplitude aufweist, wodurch sich die eingangs bereits beschriebenen Störeffekte weniger stark auf das Messergebnis auswirken.

Bei einer weiteren vorteilhaften Ausführungsform ist vorgesehen, dass ferner eine zweite, zumindest abschnittsweise entlang des Messweges angeordnete, Leiterschleife zur Erfassung des von dem Positionsgeber erzeugten magnetischen Signals vorgesehen ist, wobei die Auswerteeinrichtung zur Ermittlung der Position in Abhängigkeit des ersten Signals und eines durch das magnetische Signal in der zweiten Leiterschleife erzeugten zweiten Signals ausgebildet ist.

Bei einer bevorzugten Ausgestaltung weist mindestens ein Abschnitt der ersten Leiterschleife einen im Wesentlichen etwa sinusförmigen Verlauf bezogen auf eine Referenzposition des Messweges auf, und mindestens ein Abschnitt der zweiten Leiterschleife weist einen im Wesentlichen etwa cosinusförmigen Verlauf bezogen auf die Referenzposition des Messweges auf. Dadurch ist eine besonders präzise Positionserfassung möglich.

Bei einer weiteren vorteilhaften Ausführungsform ist vorgesehen, dass wenigstens eine Leiterschleife so ausgebildet ist, dass sich die Größe eines differentiellen Flächenelements der wenigstens eine Leiterschleife entlang einer Koordinatenachse des Messweges gemäß einer vorgebbaren Funktion ändert. Daraus ergibt sich eine von der Größe des differentiellen Flächenelements abhängende Induktionsspannung in der betrachteten Leiterschleife infolge der Beaufschlagung mit dem periodischen magnetischen Signal des Positionsgebers, sodass durch Auswertung z.B. der Amplitude des in der Leiterschleife induzierten Spannungssignals auf die Position des Positionsgebers geschlossen werden kann.

Es ist zu beachten, dass bei einigen Ausführungsformen die erwähnte Funktion - wenigstens für eine Leiterschleife - auch eine Konstante, d.h. unabhängig von der Positionskoordinate, sein kann.

Sofern die vorgebbare Funktion eine eindeutige Zuordnung der Größe des differentiellen Flächenelements der betrachteten Leiterschleife zu einer entsprechenden Position entlang der Koordinatenachse des Messweges festlegt, reicht zur genauen Positionsbestimmung einer Ausführungsform zufolge bereits die Verwendung dieser einen betrachteten Leiterschleife aus.

Bei einer besonders bevorzugten Ausführungsform ist vorgesehen, dass wenigstens drei Leiterschleifen vorgesehen sind, wobei eine der ersten Leiterschleife zugeordnete Funktion eine Sinusfunktion ist, wobei eine der zweiten Leiterschleife zugeordnete Funktion eine Cosinusfunktion ist, und wobei eine der dritten Leiterschleife zugeordnete Funktion eine Konstante ist. Dadurch wird vorteilhaft bewirkt, dass infolge der Einstrahlung des periodischen magnetischen Signals des Positionsgebers in der ersten Leiterschleife eine erste Induktionsspannung auftritt, welche eine sinusförmige Abhängigkeit von der Position des Positionsgebers aufweist, während in der zweiten Leiterschleife eine entsprechend cosinusförmige Induktionsspannung auftritt. In der dritten Leiterschleife wird auf Grund der konstanten Größe des differentiellen Flächenelements, unabhängig von der Position des Positionsgebers bzw. des von ihm ausgehenden magnetischen Signals, ein Spannungssignal mit konstanter Hüllkurve induziert, welches bei einer bevorzugten Ausführungsform als Referenzsignal zur Auswertung verwendbar ist.

Als eine weitere vorteilhafte Lösung der Aufgabe der vorliegenden Erfindung ist ein Betriebsverfahren für einen Positionsgeber gemäß Patentanspruch 10 angegeben.

Als noch eine weitere Lösung der Aufgabe der vorliegenden Erfindung ist ein Verfahren zum Betreiben einer Positionsmesseinrichtung gemäß Patentanspruch 12 angegeben. Bei einer besonders bevorzugten Ausführungsform dieses Verfahrens ist wenigstens eine Leiterschleife so ausgebildet, dass sich die Größe eines differentiellen Flächenelements der wenigstens einen Leiterschleife entlang einer Koordinatenachse des Messweges gemäß einer vorgebbaren Funktion ändert.

Bei einer weiteren Ausführungsform ist vorgesehen, dass wenigstens drei Leiterschleifen vorgesehen sind, wobei eine der ersten Leiterschleife zugeordnete Funktion eine Sinusfunktion ist, wobei eine der zweiten Leiterschleife zugeordnete Funktion eine Cosinusfunktion ist, und wobei eine der dritten Leiterschleife zugeordnete Funktion eine Konstante ist, wobei die Auswerteeinrichtung die Position in Abhängigkeit des ersten Signals und eines durch das magnetische Signal der zweiten Leiterschleife erzeugten zweiten Signals und eines durch das magnetische Signal in der dritten Leiterschleife erzeugten dritten Signals ermittelt.

Bei einer weiteren bevorzugten Ausführungsform wird das zweite Signal um 90° (Grad) phasenverschoben, um ein phasenverschobenes zweites Signal zu erhalten, und das erste Signal wird zu dem phasenverschobenen zweiten Signal addiert, um ein Summensignal zu erhalten, wobei ein Phasenvergleich zwischen dem Summensignal und dem dritten Signal ausgeführt wird, um die Position zu ermitteln.

Bei einer weiteren besonders bevorzugten Ausführungsform weist der Phasenvergleich die folgenden Schritte auf: Umwandeln des Summensignals in ein erstes Digitalsignal, Umwandeln des dritten Signals in ein zweites Digitalsignal, Vergleichen der Phasen des ersten und zweiten Digitalsignals, insbesondere im Wege einer Zeitmessung, um die Position zu ermitteln. Dadurch ist eine besonders einfache und effiziente Positionsermittlung ermöglicht. Insbesondere kann die erfindungsgemäß vorgeschlagene Ermittlung der Phasenverschiebung bzw. Ausführung des Phasenvergleichs durch eine auch mit einfachen elektronischen Bauelementen realisierbare hochpräzise Zeitmessung erfolgen. Bei einer Erfindungsvariante kann das Umwandeln des Summensignals bzw. des dritten Signals in die entsprechenden Digitalsignale effizient und kostengünstig bspw. mittels Komparatoren, insbesondere Schmitt-Triggern, erfolgen.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

In der Zeichnung zeigt:

Figur 1 schematisch ein Blockdiagramm eines Positionsgebers gemäß einer Ausführungsform,
Figur 2 schematisch eine Seitenansicht einer Positionsmesseinrichtung gemäß einer Ausführungsform,
Figur 3 schematisch einen Ausschnitt einer Leiterschleife gemäß einer Ausführungsform,

Figur 4 schematisch eine Draufsicht auf Leiterschleifen einer Positionsmesseinrichtung gemäß einer Ausführungsform,

Figur 5a, 5b jeweils schematisch Aspekte der induktiven Energieversorgung des Positionsgebers gemäß weiterer Ausführungsformen,

Figur 6 schematisch Leiterschleifen einer Positionsmesseinrichtung gemäß einer weiteren Ausführungsform,

Figur 7 schematisch ein vereinfachtes Blockdiagramm gemäß einer Ausführungsform, und

Figur 8 schematisch ein Blockdiagramm einer Ausführungsform des erfindungsgemäßen Verfahrens.

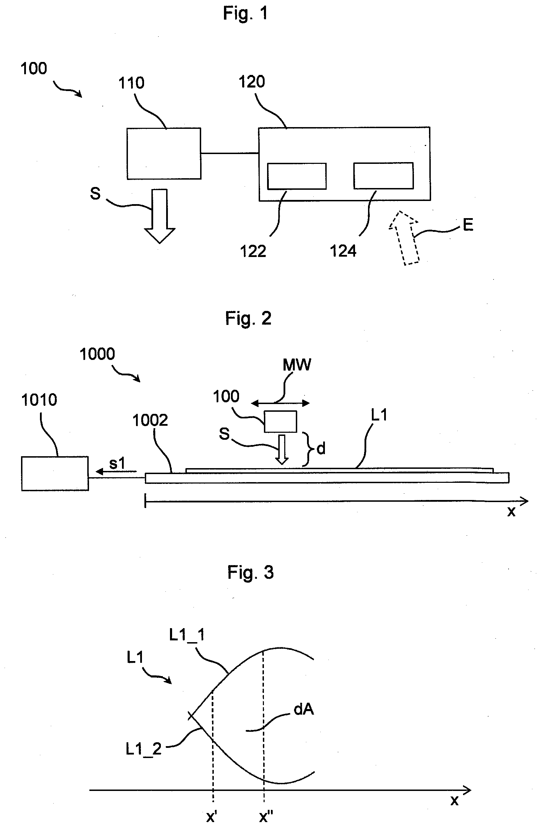

Figur 1 zeigt schematisch ein Blockschaltbild des erfindungsgemäßen Positionsgebers 100 gemäß einer ersten Ausführungsform. Der Positionsgeber 100 weist eine Signalerzeugungseinrichtung 110 zur Erzeugung eines periodischen magnetischen Signals S auf. Das periodische magnetische Signal S kann in wenigstens eine Messschleife einer später zu beschreibenden Positionsmesseinrichtung einkoppeln und darin ein entsprechendes Induktionssignal hervorrufen, dessen Auswertung eine Positionsermittlung des Positionsgebers 100 ermöglicht.

Der erfindungsgemäße Positionsgeber 100 weist ferner eine elektrische Energieversorgungseinrichtung 120 zur Versorgung der Signalerzeugungseinrichtung 110 mit elektrischer Energie auf. Dadurch ist vorteilhaft, ein "aktiver" Positionsgeber 100 realisiert, also ein Positionsgeber 100, der selbst aktiv das periodische magnetische Signal S erzeugen und mit entsprechend großer Amplitude in ein oder mehrere Messschleifen einer Positionsmesseinrichtung einkoppeln kann. Dadurch wird eine besonders schnelle und präzise Positionsmessung ermöglicht.

Vorteilhaft weist der Positionsgeber 100 einen lokalen Energiespeicher 122 auf, der dazu ausgebildet ist, elektrische Energie in Form einer Gleichspannung zu speichern. Besonders bevorzugt ist der lokale Energiespeicher 122 als Kondensator ausgebildet. Weiter weist die elektrische Energieversorgungseinrichtung 120 auch mindestens einen Energiewandler 124 auf, der eine Empfangsspule zur Aufnahme von Energie aus einem Induktionsfeld aufweist, der also dazu ausgebildet ist, von einer externen Einheit (nicht gezeigt) oder generell von der Umgebung des Positionsgebers 100 zugeführte Energie E zumindest teilweise aufzunehmen und in andere Energieformen, insbesondere in elektrische Energie umzuwandeln. Vorteilhaft kann die Energie E für den Positionsgeber 100 in Form eines magnetischen Induktionsfelds bereitgestellt werden. Der Energiewandler 124 ist dazu ausgebildet, wenigstens einen Teil der magnetischen Energie des Induktionsfelds in elektrische Energie umzuwandeln, insbesondere unter Ausnutzung des Induktionsprinzips, sodass bspw. der Kondensator 122 unter Verwendung der auf diese Weise empfangenen Energie aufgeladen werden kann. Besonders vorteilhaft ist also eine induktive Versorgung des Positionsgebers 100 mit elektrischer Energie möglich, wobei bspw. eine dem Positionsgeber 100 zugeordnete Positionsmesseinrichtung über mindestens eine entsprechende Induktionsspule (1030, 1030a, s.u.) zur Erzeugung des Induktionsfeldes verfügt.

Bei einer bevorzugten Ausführungsform weist das periodische magnetische Signal S eine Frequenz im Bereich von etwa 1 kHz bis etwa 200 kHz auf, insbesondere im Bereich von etwa 10 kHz bis etwa 20 kHz, was eine besonders präzise Positionserfassung ermöglicht.

Bei einer weiteren bevorzugten Ausführungsform ist der erfindungsgemäße Energiewandler 124 dazu ausgebildet, magnetische Feldenergie aus einem Induktionsfeld mit einer Frequenz von etwa 1 MHz (Megahertz) bis etwa 4 MHz, insbesondere etwa 2 MHz, zu entnehmen. Durch die den Signalen S, E zugeordneten verschiedenen Frequenzbereiche ist vorteilhaft sichergestellt, dass weitgehend keine gegenseitige Beeinflussung erfolgt, insbesondere keine unerwünschte Rückwirkung der induktiven Energieübertragung E auf den Positionsgeber 100 bzw. das von ihm für die Positionserfassung erzeugte magnetische Signal S. Vielmehr kann eine Auswertung des magnetischen Signals S bzw. von daraus abgeleiteten Signalen wie bspw. Induktionsspannungssignalen eine einfache Filterung umfassen, bspw. unter Verwendung eines Tiefpassfilters, um "Signalanteile" des Induktionsfelds vor der eigentlichen Positionsauswertung zu eliminieren. Weiter weist die elektrische Energieversorgungseinrichtung 120 wenigstens einen Gleichrichter zum Aufladen des Energiespeichers 122 unter Verwendung der Gleichspannung auf. Die durch den Gleichrichter erzeugte Gleichspannung wird also zum Aufladen des Energiespeichers genutzt. Die beispielsweise aus dem vorstehend beschriebenen Induktionsfeld bei einer Frequenz von z.B. etwa 1 MHz bis etwa 4 MHz erhaltene Energie kann sodann lokal auf dem Positionsgeber 100 gleichgerichtet und dazu verwendet werden, einen ebenfalls lokal auf dem Positionsgeber 100 angeordneten Energiespeicher 122 wie z.B. einen Akkumulator oder Kondensator aufzuladen. Weiter vorteilhaft weist die Signalerzeugungseinrichtung 110 wenigstens einen aktiven Oszillator auf. Dadurch ist vorteilhaft die Möglichkeit gegeben, aktiv in dem Positionsgeber 100 das periodische magnetische Signal S zu erzeugen, welches bei einer zugeordneten Positionsmesseinrichtung zur Ermittlung der Position des Positionsgebers 100 nutzbar ist. Beispielsweise kann eine als Sender vorgesehene Magnetspule der Signalerzeugungseinrichtung 110 direkt mit dem Ausgangssignal des Oszillators beaufschlagt werden. Alternativ kann das Ausgangssignal des Oszillators zunächst verstärkt werden, und die Magnetspule wird sodann mit dem verstärkten Ausgangssignal des Oszillators beaufschlagt, um das periodische magnetische Signal zu erzeugen. Unter einem "aktiven" Oszillator wird vorliegend ein Oszillator verstanden, der zur Energieversorgung eine elektrische Gleichspannung als Eingangsspannung erhält, und der aktiv ein Wechselsignal als Ausgangssignal erzeugt.

Figur 2 zeigt schematisch eine Seitenansicht einer Positionsmesseinrichtung 1000 gemäß einer Ausführungsform der Erfindung. Die Positionsmesseinrichtung 1000 weist eine erste Leiterschleife L1 auf, die sich entlang einer Positionskoordinate x und damit entlang eines Messweges MW des in Figur 2 oberhalb der ersten Leiterschleife L1 angeordneten Positionsgebers 100 erstreckt. Besonders bevorzugt ist die erste Leiterschleife in einer ebenen Konfiguration auf einem Trägerelement 1002 angeordnet, bei dem es sich bspw. um ein Platinenmaterial zur Herstellung elektrischer Leiterplatten handeln kann. Besonders bevorzugt ist die erste Leiterschleife L1 sowie ggf. vorhandene weitere Leiterschleifen (nicht in Figur 2 gezeigt) in Form ein oder mehrerer Leiterbahnen auf dem Platinenmaterial 1002 realisiert.

Als Platinenmaterial kommt bspw. FR4-Material oder auch ein Keramikmaterial oder dergleichen in Betracht. Bei weiteren Ausführungsformen sind auch flexible Folienleiter zur Aufnahme ein oder mehrerer Leiterschleifen denkbar, wodurch weitere Freiheitsgrade zur Ausbildung des Messweges MW gegeben sind.

Aus Figur 2 ist ersichtlich, dass der Positionsgeber 100 das von ihm erzeugte periodische magnetische Signal S in Richtung der ersten Leiterschleife L1 abgibt, woraus sich infolge von Induktionseffekten ein erstes Signal s1 in der Leiterschleife L1 ergibt, welches durch die Auswerteeinrichtung 1010 für die Ermittlung der Position x des Positionsgebers 100 auswertbar ist.

Bei einer besonders bevorzugten Konfiguration beträgt der in Figur 2 vertikale Abstand d zwischen dem Positionsgeber 100 bzw. seiner Signalerzeugungseinrichtung 110 (Figur 1) und der Ebene der Leiterschleife L1 wenige Millimeter, bspw. zwischen etwa 0 mm und etwa 20 mm, vorzugsweise zwischen etwa 0,1 mm und 10 mm.

Bei manchen Ausführungsformen kann das Trägerelement 1002 mit der darauf angeordneten ersten Leiterschleife L1 auch ein Gehäuse (nicht gezeigt) aufweisen, wobei wenigstens im Bereich der Leiterschleife L1 bzw. entlang des Messweges MW für das Gehäusematerial ein Werkstoff zu wählen ist, der das Hindurchtreten des magnetischen Signals S von dem Positionsgeber 100 auf die erste Leiterschleife L1 zulässt.

Bei anderen Ausführungsformen kann der Positionsgeber 100 auch direkt auf einer Oberfläche der Leiterschleife L1 bzw. des Trägerelements gleitend angeordnet sein. In diesem Fall können der Positionsgeber 100 bzw. seine Signalerzeugungseinrichtung 110 und/oder die Leiterschleife L1 eine entsprechende Gleitschicht (nicht gezeigt) aufweisen, die vorteilhaft elektrisch isolierend ausgebildet ist, um einen galvanischen Kontakt zwischen der Signalerzeugungseinrichtung 110 und der Leiterschleife L1 zu verhindern.

Bei einer besonders bevorzugten Ausführungsform ist vorgesehen, dass wenigstens eine Leiterschleife L1 der Positionsmesseinrichtung 1000 so ausgebildet ist, dass sich die Größe eines differentiellen Flächenelements der wenigstens einen Leiterschleife L1 entlang einer Koordinatenachse x des Messweges MW gemäß einer vorgebbaren Funktion ändert. Figur 3 zeigt hierzu schematisch einen Ausschnitt einer beispielhaft betrachteten ersten Leiterschleife L1, die sich entlang der Koordinatenachse x erstreckt. Wie aus Figur 3 ersichtlich ist, weist ein erster Abschnitt L1_1 der ersten Leiterschleife L1 im Wesentlichen Sinusform (also proportional sin(x)) auf bezüglich einer zur Koordinatenachse x gedachten parallelen Achse (nicht gezeigt), während der zweite Abschnitt L1_2 im Wesentlichen eine negative Sinusform (also proportional -sin(x)) bezüglich derselben Achse aufweist. Damit ergibt sich für das beispielhaft betrachtete differentielle Flächenelement dA der Figur 3 eine Größe, die von dem Wert der Sinusfunktion im Bereich der Stützstellen x', x'' sowie von der i.d.R. konstanten Intervallbreite x'' - x' abhängt. Durch den bekannten Zusammenhang zwischen der Positionskoordinate x und der vorgebbaren Funktion, vorliegend einer Sinusfunktion, kann einer Ausführung der Erfindung zufolge aus einer Amplitude des in der ersten Leiterschleife L1 auf Grund des magnetischen Signals S induzierten ersten Signals s1, bei dem es sich um ein Induktionsspannungssignal handelt, auf die Position x geschlossen werden, an der sich der Positionsgeber 100 befindet. Bei anderen Positionen x weist das differentielle Flächenelement entsprechend des sinusförmigen Verlaufs der beispielhaft betrachteten ersten Leiterschleife L1 andere Werte auf, die folglich auf andere Signalamplituden für das erste Signal s1 führen.

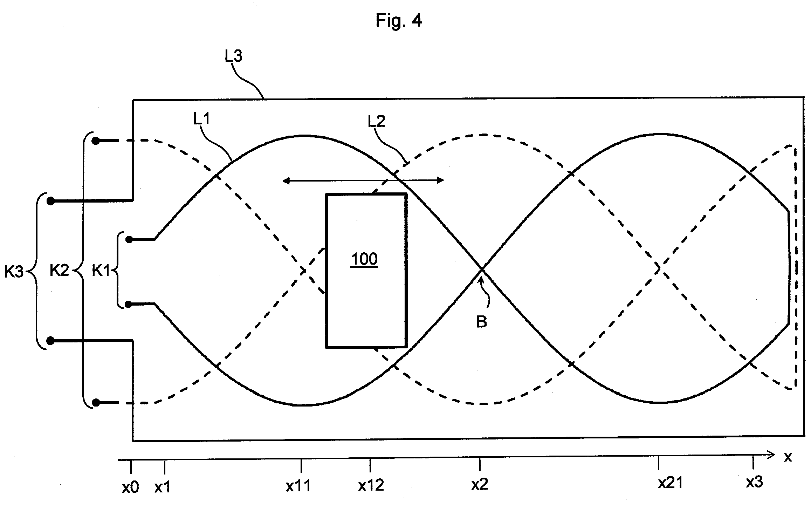

Figur 4 zeigt eine weitere Ausführungsform der Erfindung. Abgebildet ist eine Draufsicht auf eine schematische Leiterschleifenanordnung der Positionsmesseinrichtung gemäß einer Ausführungsform.

Eine erste Leiterschleife L1 weist im Wesentlichen eine Sinusform bezüglich der Referenzposition x0 auf. Genauer gesagt umfasst die erste Leiterschleife L1 - in Analogie zu Figur 3 - zwei in Figur 4 nicht näher bezeichnete Abschnitte, von denen der erste eine positive Sinusform bezüglich der Referenzposition x0 und von denen der zweite eine negative Sinusform bezüglich der Referenzposition x0 aufweist. In dem Bereich B (Positionskoordinate x2) überkreuzen sich die beiden Abschnitte, ohne jedoch galvanisch miteinander verbunden zu sein, und im Bereich der Positionskoordinate x3 ist die erste Leiterschleife L1 unter Abweichung der Sinusform durch einen in Figur 4 im Wesentlichen vertikal verlaufenden Abschnitt geschlossen.

Eine zweite Leiterschleife L2, die in Figur 4 zur besseren Übersichtlichkeit durch eine gestrichelte Linie dargestellt ist, weist demgegenüber Cosinusform bezüglich der Referenzposition x0 auf. Für ihre einzelnen ebenfalls nicht näher bezeichneten Abschnitte gilt das vorstehend zur ersten Leiterschleife L1 Gesagte entsprechend, wobei Überkreuzungen dieser Abschnitte im Bereich der Positionskoordinaten x11, x21 auftreten.

Eine dritte Leiterschleife L3, welche im Wesentlichen Rechteckform aufweist und somit eine konstante Größe für das vorstehend und unter Bezugnahme auf Figur 3 beschriebene differentielle Flächenelement aufweist, umgibt die beiden Leiterschleifen L1, L2.

Zusätzlich ist in Figur 4 der Positionsgeber 100 gemäß einer Ausführungsform abgebildet. Er ist entlang der Positionskoordinate x bzw. des Messweges, vgl. den nicht bezeichneten Doppelpfeil, über den Leiterschleifen L1, L2, L3 bewegbar. Ein Trägerelement 1002, wie es aus Figur 2 hervorgeht, ist der Übersichtlichkeit halber in Figur 4 nicht abgebildet, kann jedoch beispielsweise als Platine, insbesondere multilayer-Platine (Mehrlagenplatine), ausgebildet sein, wobei sich einzelne Abschnitte der Leiterschleifen L1, L2, L3 jeweils über ein oder mehrere Lagen erstrecken können, die untereinander in an sich bekannter Weise z.B. mittels Durchkontaktierungen (engl.: "vias") verbunden sind.

Der ersten Leiterschleife L1 sind die Klemmen K1, der zweiten Leiterschleife L2 die Klemmen K2, und der dritten Leiterschleife L3 die Klemmen K3 zugeordnet.

Zur Ermittlung der Position x des Positionsgebers 100 erzeugt der Positionsgeber 100 in der vorstehend beschriebenen Weise mittels seiner Signalerzeugungseinrichtung 110 (Figur 1) ein periodisches magnetisches Signal S (Figur 2) mit einer Frequenz von bspw. etwa 10 kHz. Dies kann bspw. dadurch erfolgen, dass eine Magnetspule (nicht gezeigt) des Positionsgebers 100 durch ein elektrisches Signal entsprechender Frequenz beaufschlagt wird. Durch den daraus resultierenden Stromfluss durch die Spule entsteht in an sich bekannter Weise ein Magnetfeld derselben Frequenz. Das elektrische Signal kann bspw. mittels des vorstehend bereits beschriebenen Oszillators erzeugt werden.

Aufgrund des Induktionsgesetzes ergibt sich bei einem derartigen Betrieb des Positionsgebers 100 in allen drei Leiterschleifen L1, L2, L3 gemäß Figur 4 eine entsprechende Induktionsspannung, die für die weitere Beschreibung auch als erstes bzw. zweites bzw. drittes Signal bezeichnet wird. Das erste Signal entspricht demnach der Induktionsspannung in der ersten Leiterschleife L1, wie sie bspw. an den Klemmen K1 der ersten Leiterschleife L1 abgegriffen werden kann. Das zweite Signal entspricht der an den Klemmen K2 der zweiten Leiterschleife L2 anstehenden Induktionsspannung, und das dritte Signal entspricht der Induktionsspannung an den Klemmen K3 der dritten Leiterschleife L3.

Während die ersten und zweiten Signale der ersten und zweiten Leiterschleife L1, L2 jeweils eine positionsabhängige Amplitude bzw. Hüllkurve aufweisen, weist das an den Klemmen K3 anliegende dritte Signal keine positionsabhängige, sondern eine konstante Amplitude auf, da für alle möglichen Positionen x des Positionsgebers 100 entlang des Messweges MW im Wesentlichen derselbe maximale magnetische Fluss durch die dritte Leiterschleife L3 hindurchtritt.

Die Klemmen K1, K2, K3 sind wie aus Figur 4 ersichtlich etwa bei der Positionskoordinate x0 angeordnet, während sich der sinnvoll nutzbare Messweg zwischen den Positionskoordinaten x>x1, x<x3 erstreckt. Auf Grund der von der idealen Sinus- bzw. Cosinusform abweichenden Form der Leiterschleifen L1, L2 im Bereich der Positionskoordinaten x<x1, x>x3 empfiehlt es sich, den Messweg entsprechend zu begrenzen.

Beispielsweise kann der Positionsgeber 100 bei einer Ausführungsform des erfindungsgemäßen Verfahrens ein periodisches magnetisches Signal S derart erzeugen, dass sich in der dritten Leiterschleife L3 eine Induktionsspannung als Referenzsignal s3 gemäß der folgenden Gleichung einstellt:

$$s3 = U \cdot \sin(\omega \cdot t),$$

wobei $\omega = 2 \cdot \pi \cdot 10\,\text{kHz}$, wobei U einen Scheitelwert der Induktionsspannung repräsentiert, der in an sich bekannter Weise von der Amplitude des magnetischen Signals S und z.B. dem Abstand des Positionsgebers 100 bzw. seiner Signalerzeugungseinrichtung 110 (Figur 1) von der Ebene der dritten Leiterschleife L3 abhängig ist. Das auf diese Weise erhaltene Signal s3 dient vorzugsweise als Referenzsignal für eine Auswertung der weiteren Signale s1, s2 im Sinne einer Ermittlung der Position x12 des Positionsgebers 100.

Für das erste Signal an den Klemmen K1 der ersten Leiterschleife L1 wird bei der vorliegenden Ausführungsform ein Signal gemäß der vorliegenden Gleichung erhalten:

$$s1 = U \cdot \sin(\omega \cdot t) \cdot \sin(x).$$

Analog ergibt sich für das zweite Signal der zweiten Leiterschleife L2:

$$s2 = U \cdot \sin(\omega \cdot t) \cdot \cos(x).$$

Bei einer besonders bevorzugten Ausführungsform wird zur Positionsermittlung das zweite Signal s2, welches durch die zweite Leiterschleife L2 erhalten wird, einer Phasenverschiebung um 90° unterworfen, wodurch ein phasenverschobenes zweites Signal s2' gemäß der folgenden Gleichung erhalten wird:

$$s2' = U \cdot \sin(\omega \cdot t + 90°) \cdot \cos(x) = U \cdot \cos(\omega \cdot t) \cdot \cos(x).$$

Eine Addition des phasenverschobenen zweiten Signals s2' mit dem ersten Signal führt auf das Summensignal s4:

$$s4 = U \bullet \sin(\omega \bullet t) \bullet \sin(x) + U \bullet \cos(\omega \bullet t) \bullet \cos(x) = U \bullet \cos(\omega \bullet t - x).$$

Das gemäß der vorstehenden Gleichung erhaltene Summensignal s4 wird sodann einem Phasenvergleich mit dem Referenzsignal s3 unterworfen, wobei sich aus der Phasendifferenz die Position x, vorliegend x = x12, ergibt.

Die vorstehend beschriebene Auswertung ist besonders vorteilhaft, da der Phasenvergleich mit sehr hoher Präzision und verhältnismäßig geringer Komplexität ausgeführt werden kann.

Bei einer besonders bevorzugten Ausführungsform ist vorgesehen, dass für den Phasenvergleich das Summensignal s4 in ein erstes Digitalsignal umgewandelt wird, und dass das dritte Signal s3, also das Referenzsignal, in ein zweites Digitalsignal umgewandelt wird, was beispielsweise durch Komparatoren oder Schmitt-Trigger erfolgen kann. Der Vergleich zwischen den Phasen des ersten und zweiten Digitalsignals kann dann vorteilhaft im Wege einer Zeitmessung erfolgen.

Bspw. kann ein erster Zeitpunkt T1 definiert werden als Zeitpunkt des Auftretens einer positiven Flanke des ersten Digitalsignals, während ein zweiter Zeitpunkt T2 > T1 definiert wird als der Zeitpunkt des ersten Auftretens einer positiven Flanke des zweiten Digitalsignals. In diesem Fall ist die Zeitdifferenz T2-T1 direkt proportional zu der Phasendifferenz zwischen den betrachteten Digitalsignalen, so dass aus dieser Zeitdifferenz die Phasendifferenz und hieraus schließlich die aktuelle Position x12 des Positionsgebers 100 ermittelt werden kann.

Da hochgenaue Zähler für eine Zeitmessung im kHz-Bereich (Millisekundenbereich bzw. Mikrosekundenbereich) auch bei vergleichsweise einfachen Mikrocontrollern oder digitalen Signalprozessoren (DSP) verfügbar sind, kann eine entsprechende Auswerteeinrichtung 1010 (Fig. 2) für die Positionsmesseinrichtung 1000 sehr kostengünstig bereit gestellt werden, ohne dass auf die besonders hohe Präzision, die die erfindungsgemäße Vorsehung des aktiven Positionsgebers 100 ermöglicht, verzichtet werden muss.

Generell kann die Auswerteeinheit 1010 einer Ausführungsform zufolge eine Recheneinheit zur Ausführung des vorstehend beschriebenen Verfahrens aufweisen. Die Recheneinheit kann bspw. als Mikrocontroller oder als digitaler Signalprozessor ausgebildet sein. Die Vorsehung eines ASIC (application specific integrated circuit, anwendungsspezifischer integrierter Schaltkreis) oder eines FPGA (field programmable gate array, programmierbarer Logikbaustein) ist ebenfalls denkbar.

Besonders bevorzugt kann die Zeitmessung bei weiteren Ausführungsformen durch an sich bekannte Mechanismen wie z.B. timer interrupts oder dergleichen von bekannten Mikrocontrollern implementiert werden. Alternativ oder ergänzend kommt auch die Verwendung von diskreten Zählerbausteinen (z.B. CMOS HC 4020) oder Zeitmessbausteinen (TDC, time to digital converter) in Betracht.

Alternativ zu der vorstehend beschriebenen Auswertung ist es auch denkbar, die Analogsignale s1, s2 bzw. s3 direkt mittels eines Mikrocontrollers oder einer Recheneinheit anderen Typs auszuwerten. Bspw. ist es denkbar, die Signale s1, s2, s3 mit einer hinreichend großen Abtastrate, die deutlich größer sein sollte als die Frequenz des periodischen Signals S, abzutasten und in Digitalsignale umzuwandeln. Anschließend kann eine Auswertung der Amplituden und/oder der Phasendifferenz wie vorstehend beschrieben durch den Mikrocontroller vorgenommen werden.

Bei einer weiteren vorteilhaften Ausführungsform ist es auch möglich, nur eine einzige Leiterschleife L1 vorzusehen. In diesem Fall erfolgt die Positionsbestimmung unter Ausnutzung eines eindeutigen Zusammenhangs zwischen der Amplitude des Induktionsspannungssignals s1 der einzigen Leiterschleife L1 und der Position x. Um einen entsprechend großen Eindeutigkeitsbereich sicherzustellen, ist die Geometrie der betrachteten Leiterschleife L1 dementsprechend so zu wählen, dass maximal eine Sinuswelle bzw. nur eine Halbwelle in dem betrachteten Messweg MW enthalten ist.

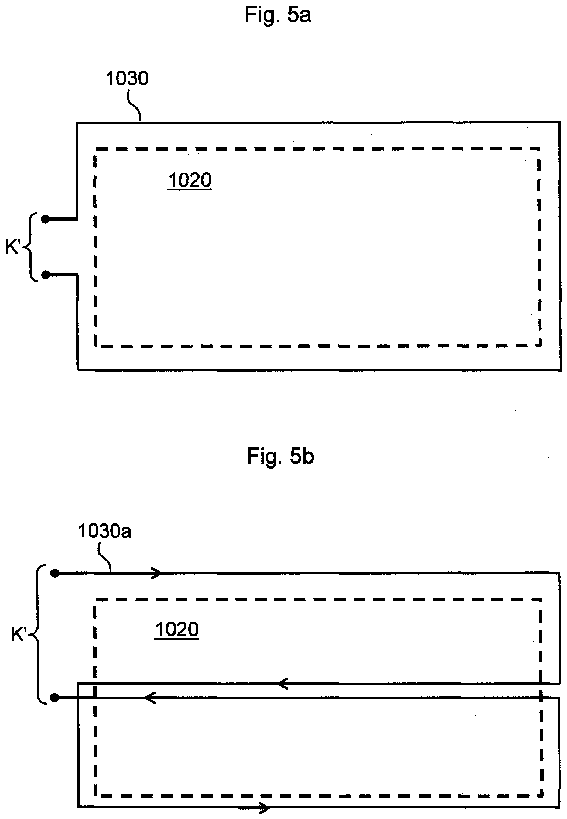

Figur 5a zeigt eine weitere Ausführungsform der Erfindung. Abgebildet ist eine schematische Draufsicht auf die Leiterplattenanordnung gemäß Figur 4, die vorliegend durch ein gestricheltes Rechteck und das Bezugszeichen 1020 angedeutet ist und im Detail die drei Leiterschleifen L1, L2, L3, wie in Figur 4 abgebildet, enthält.

Um die Anordnung 1020 herum ist eine weitere Leiterschleife 1030 angeordnet, welche vorliegend beispielhaft nur eine Windung aufweist, bei einer bevorzugten Ausführungsform jedoch auch mehrere Windungen aufweisen kann. Die Leiterschleife 1030 wird an ihren Klemmen K' mit einem elektrischen Signal, welches vorzugsweise eine Frequenz von etwa 1 MHz oder mehr aufweist, beaufschlagt, um ein Induktionsfeld der entsprechenden Frequenz bereitzustellen. Auf diese Weise kann ein im Bereich der Leiterschleifenanordnung 1020 und damit auch innerhalb der weiteren Leiterschleife 1030 angeordneter Positionsgeber 100 (Figur 2) über die elektromagnetische Induktion durch die vierte Leiterschleife 1030 mit Energie für den Betrieb seines Oszillators bzw. seiner Signalerzeugungseinrichtung 110 versorgt werden. Da die Induktionsleiterschleife 1030 vorzugsweise mit Frequenzen von 1 MHz oder mehr betrieben wird, ist eine effiziente Energieversorgung des Positionsgebers 100 möglich und gleichzeitig vorteilhaft gewährleistet, dass der Messbetrieb, der unter Verwendung des magnetischen Signals S im kHz-Bereich abläuft, nicht gestört wird.

Ggf. kann die Auswerteeinrichtung 1010 (Fig. 2) einer Ausführungsform zufolge vor der eigentlichen Positionsermittlung eine Tiefpassfilterung der Signale s1 und/oder s2 und/oder s3 vornehmen, um sicherzustellen, dass die verhältnismäßig hochfrequenten Induktionssignale keinen Eingang in die Positionsermittlung finden. Die Tiefpassfilterung kann je nach Auswerteprinzip analog und/oder digital erfolgen, wird bei einer besonders bevorzugten Ausführungsform jedoch bereits analog ausgeführt und mit der Positionsermittlung durch Phasenvergleich wie vorstehend beschrieben kombiniert.

Figur 5b zeigt eine weitere bevorzugte Variante für die Induktionsspule 1030a zur Versorgung des Positionsgebers 100 mit Energie. Im Gegensatz zu der Variante gemäß Figur 5a weist die Leiterschleife 1030a gemäß Figur 5b eine modifizierte Topologie auf, die eine Verringerung der magnetischen Felder um die Leiterschleife 1030a herum bewirkt ("Feldbalancierung").

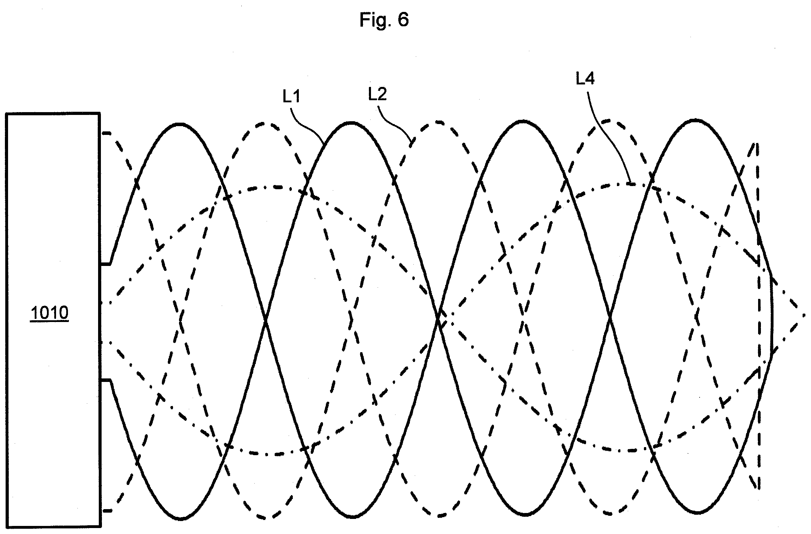

Figur 6 zeigt schematisch eine Leiterschleifenanordnung gemäß einer weiteren Ausführungsform. Insgesamt sind drei Leiterschleifen L1, L2, L4 abgebildet, wobei die Leiterschleifen L1, L2 im Wesentlichen den Leiterschleifen L1, L2 gemäß Figur 4 entsprechen. Die dritte abgebildete Leiterschleife L4 in Figur 6 weist ähnlich zur Leiterschleife L1 der Figur 6 eine sinusförmige Geometrie entlang der Positionskoordinate x (Figur 4) und bezogen auf den Anschlussort der Auswerteeinrichtung 1010 (Fig. 6) auf, jedoch mit einer größeren Periodendauer bzw. Wellenlänge. Das in die dritte Leiterschleife L4 induzierte Signal kann daher durch die Auswerteeinrichtung 1010 vorteilhaft dazu genutzt werden, in eindeutiger Weise eine grobe Positionsbestimmung des Positionsgebers (nicht in Figur 6 abgebildet) vorzunehmen. Eine Verfeinerung des so erhaltenen Positionswerts ist unter Auswertung der Signale der Leiterschleifen L1, L2 gemäß des vorstehend beschriebenen Prinzips möglich.

Optional kann auch die Anordnung gemäß Figur 6 eine weitere Leiterschleife mit Rechteckform ähnlich der Leiterschleife L3 aus Figur 4 aufweisen, zum Zwecke der Bereitstellung eines Referenzsignals. Die Ausführungsformen der Figur 4, 5a, 5b, 6 sind auch miteinander kombinierbar.

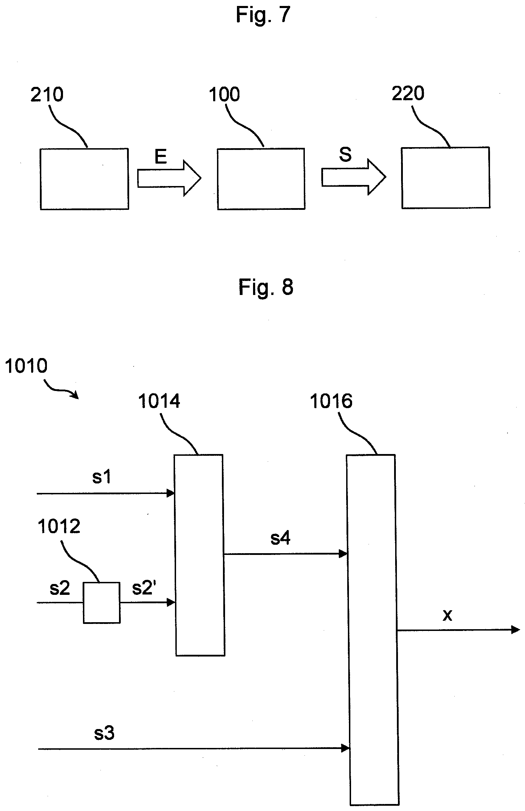

Figur 7 zeigt ein vereinfachtes Blockdiagramm zur Veranschaulichung des erfindungsgemäßen Prinzips. Block 210 repräsentiert einen "Induktionssender", der das vorstehend unter Bezugnahme auf die Figuren 5a, 5b beschriebene Induktionsfeld, bspw. mit einer Frequenz von etwa 1 MHz, bereitstellt und auf diese Weise den aktiven Positionsgeber 100 mit Energie E versorgt. Der aktive Positionsgeber 100 wiederum erzeugt unter Verwendung der zugeführten Energie E ein verhältnismäßig niederfrequentes (Frequenz zwischen ca. 1 kHz bis ca. 200 kHz) periodisches magnetisches Signal S zur Einstrahlung in eine Leiterschleifenanordnung einer Positionsmesseinrichtung, die vorliegend durch den Block 220 veranschaulicht ist.

Vorteilhaft wird dem Positionsgeber 100 über die elektromagnetische Induktion bei einer Frequenz von etwa 1 MHz Energie zur elektrischen Versorgung des Positionsgebers 100 zugeführt, und das magnetische Signal S zur eigentlichen Positionserfassung wird bevorzugt bei einer Frequenz im kHz-Bereich erzeugt, sodass die nachfolgende Auswertung durch die Auswerteeinrichtung 1010 mittels einer einfachen Filterung eine zuverlässige Trennung der interessierenden Signale von ggf. auftretenden Störungen bzw. von dem Induktionssignal I ausführen kann.

Figur 8 zeigt schematisch ein Blockdiagramm zur Positionsbestimmung durch eine Auswerteeinrichtung 1010 gemäß einer Ausführungsform, wie sie bspw. unter Verwendung der Leiterschleifenanordnung nach Figur 4 möglich ist. Das erste Signal s1, erhalten von der ersten Leiterschleife L1, wird dem Addierer 1014 zugeführt. Das zweite Signal s2, erhalten von der zweiten Leiterschleife L2, wird zunächst durch den Phasenschieber 1012 um 90° phasenverschoben, wodurch das phasenverschobene Signal s2' erhalten wird, welches seinerseits dem Addierer 1014 zugeführt wird. Der Addierer 1014 bildet aus den beiden Signalen s1, s2' ein Summensignal s4, welches, ebenso wie das Referenzsignal s3 der dritten Leiterschleife L3, dem Phasenvergleicher 1016 zugeführt wird, der aus einer Phasendifferenz zwischen den Signalen s3, s4 die Position x des Positionsgebers 100 ermittelt.

Der erfindungsgemäße aktive Positionsgeber 100 ermöglicht vorteilhaft die Erzeugung verhältnismäßig starker magnetischer Signale S zur Einkopplung in eine oder mehrere Messschleifen L1, L2, .. der Positionsmesseinrichtung 1000, wodurch eine gesteigerte Empfindlichkeit und damit eine höhere Positionsauflösung ermöglicht wird. Ebenso wird durch die erfindungsgemäße Konfiguration eine größere Dynamik eines den Positionsgeber 100 aufweisenden Gesamtsystems 1000 erzielt, so dass eine Ermittlung von Positionswerten x schneller als bei konventionellen Systemen möglich ist, mithin eine höhere Erfassungsrate realisierbar ist.

Bei Ausführungsformen des Positionsgebers 100, bei denen ein Oszillator vorgesehen ist, können vor einer Positionserfassung die folgenden Schritte ausgeführt werden, um ein zuverlässiges Anschwingen des Oszillators zu bewirken: Wie beispielsweise unter Bezugnahme auf Figur 5a, 5b beschrieben, kann der Positionsgebers 100 über die Induktionsspule 1030, 1030a mit Energie für den Betrieb des Oszillators versorgt werden. Zusätzlich kann z.B. eine der Leiterschleifen L1, L2, L3 der Positionsmesseinrichtung 1000, beispielsweise durch die Auswerteeinrichtung 1010 oder einen separaten Signalgenerator (nicht gezeigt) mit einem periodischen Signal beaufschlagt werden, das im Wesentlichen dieselbe Frequenz aufweist wie der Oszillator des Positionsgebers. Durch die induktive Kopplung zwischen der nunmehr als "Sendeschleife" fungierenden Leiterschleife L1, L2, L3 und dem Oszillator wird ein Anschwingen desselben begünstigt. Sobald der Oszillator angeschwungen ist, kann die Beaufschlagung der Leiterschleife L1, L2, L3 seitens der Auswerteeinrichtung 1010 oder des separaten Signalgenerators eingestellt werden, und es kann der eigentliche Betrieb zur Positionsmessung aufgenommen werden, in dem die Leiterschleife L1, L2, L3 als Empfangsschleifen arbeiten.

Bei einer weiteren Ausführungsform kann vorgesehen sein, dass mindestens eine Leiterschleife L1 eine von der Sinusform bzw. Cosinusform abweichende Geometrie als Funktion der Positionskoordinate x aufweist, z.B. Dreiecksgeometrie. Andere "orts-eindeutige" Formen für die Leiterschleifen sind ebenso denkbar. Ferner ist es möglich, durch eine räumliche Schachtelung mehrerer selbst nicht sinusförmiger Leiterschleifen und insbesondere einer Variation ihrer geometrischen Ausdehnung senkrecht zur Positionskoordinate x eine sinus- bzw. cosinusförmige Abhängigkeit der magnetischen Kopplung zwischen Positionsgeber und der betreffenden Leiterschleife von der Positionskoordinate x zu erhalten.

Bei einer weiteren Ausführungsform kann der Messweg MW (Fig. 2) gerade (insbesondere eindimensional) ausgebildet sein. Bei anderen Ausführungsformen ist auch ein gekrümmter Verlauf des Messweges denkbar, beispielsweise zweidimensional oder dreidimensional.

Die Erfindung gibt ein vorteilhaftes induktives Messprinzip sowie einen induktiven Positionsgeber und eine induktive Positionsmesseinrichtung an.

**Patentansprüche**

1. Positionsgeber (100) für eine elektronische Positionsmesseinrichtung (1000), wobei der Positionsgeber (100) eine Signalerzeugungseinrichtung (110) zur Erzeugung eines periodischen magnetischen Signals (S) und eine elektrische Energieversorgungseinrichtung (120) zur Versorgung der Signalerzeugungseinrichtung (110) mit elektrischer Energie aufweist, wobei der Positionsgeber (100) mindestens einen lokalen Energiespeicher (122) und einen Energiewandler (124) mit einer Empfangsspule zur Aufnahme von Energie aus einem Induktionsfeld aufweist, wobei die Energieversorgungseinrichtung (120) einen Gleichrichter zum Aufladen des lokalen Energiespeichers (122) mit einer Gleichspannung aufweist, und wobei der Positionsgeber (100) dazu ausgebildet ist, eine in der Empfangsspule induzierte Spannung mittels des Gleichrichters gleichzurichten und den lokalen Energiespeicher (122) mit einer durch den Gleichrichter erzeugten Gleichspannung aufzuladen, wobei die Signalerzeugungseinrichtung (110) wenigstens einen aktiven Oszillator aufweist, der zur Energieversorgung die Gleichspannung aus dem lokalen Energiespeicher (122) als Eingangsspannung erhält und dazu ausgebildet ist, aktiv in dem Positionsgeber das periodische magnetische Signal (S) zu erzeugen.

2. Positionsgeber (100) nach Anspruch 1, wobei der mindestens eine lokale Energiespeicher (122) einen Kondensator und/oder eine Batterie und/oder einen Akkumulator aufweist.

3. Positionsgeber (100) nach einem der vorstehenden Ansprüche, wobei der Energiewandler (124) dazu ausgebildet ist, Energie aus einem Induktionsfeld einer Frequenz von etwa 1 MHz bis etwa 4 MHz zu beziehen.

4. Positionsgeber (100) nach einem der vorstehenden Ansprüche, wobei das periodische Signal (S) eine Frequenzkomponente im Bereich von etwa ein Kilohertz bis etwa 200 Kilohertz aufweist, insbesondere im Bereich von etwa 10 Kilohertz bis etwa 20 Kilohertz .

5. Positionsgeber (100) nach Anspruch 4, wobei das periodische Signal (S) genau eine Frequenzkomponente im Bereich von etwa ein Kilohertz bis etwa 200 Kilohertz aufweist, insbesondere im Bereich von etwa 10 Kilohertz bis etwa 20 Kilohertz.

6. Positionsmesseinrichtung (1000) mit einem zur Ermittlung einer Position (x) entlang eines Messweges (MW) bewegbaren, nach einem der vorstehenden Ansprüche ausgebildeten Positionsgeber (100), wobei die Positionsmesseinrichtung (1000) aufweist: mindestens eine erste entlang des Messweges (MW) angeordnete Leiterschleife (L1) zur Erfassung eines von dem Positionsgeber (100) erzeugten magnetischen Signals (S), wobei die erste Leiterschleife (L1) so ausgebildet ist, dass sich eine magnetische Kopplung zwischen einer Signalerzeugungseinrichtung (110) des Positionsgebers (100) und der ersten Leiterschleife (L1) in Abhängigkeit der Position (x) des Positionsgebers (100) ändert, und eine Auswerteeinrichtung (1010) zur Ermittlung der Position (x) in Abhängigkeit eines durch das magnetische Signal (S) in der ersten Leiterschleife (L1) erzeugten ersten Signals (s1), wobei die Positionsmesseinrichtung (1000) wenigstens eine Induktionsspule zur Erzeugung des Induktionsfelds für den Positionsgeber (100) aufweist.

7. Positionsmesseinrichtung (1000) nach Anspruch 6, wobei ferner eine zweite zumindest abschnittsweise entlang des Messweges (MW) angeordnete Leiterschleife (L2) zur Erfassung des von dem Positionsgeber (100) erzeugten magnetischen Signals (S) vorgesehen ist, wobei die Auswerteeinrichtung (1010) zur Ermittlung der Position (x) in Abhängigkeit des ersten Signals (s1) und eines durch das magnetische Signal (S) in der zweiten Leiterschleife (L2) erzeugten zweiten Signals (s2) ausgebildet ist, und wobei vorzugsweise mindestens ein Abschnitt der ersten Leiterschleife (L1) einen im wesentlichen etwa sinusförmigen Verlauf bezogen auf eine Referenzposition (x0) des Messweges (MW) und mindestens ein Abschnitt der zweiten Leiterschleife (L2) einen im wesentlichen etwa cosinusförmigen Verlauf bezogen auf die Referenzposition (x0) des Messweges (MW) aufweist.

8. Positionsmesseinrichtung (1000) nach einem der Ansprüche 6 bis 7, wobei wenigstens eine Leiterschleife (L1) so ausgebildet ist, dass sich die Größe eines differentiellen Flächenelements (dA) der wenigstens einen Leiterschleife (L1) entlang einer Koordinatenachse (x) des Messweges (MW) gemäß einer vorgebbaren Funktion ändert.

9. Positionsmesseinrichtung (1000) nach Anspruch 8, wobei wenigstens drei Leiterschleifen (L1, L2, L3) vorgesehen sind, wobei eine der ersten Leiterschleife (L1) zugeordnete Funktion eine Sinusfunktion ist, wobei eine der zweiten Leiterschleife (L2) zugeordnete Funktion eine Cosinusfunktion ist, und wobei eine der dritten Leiterschleife (L3) zugeordnete Funktion eine Konstante ist.

10. Verfahren zum Betreiben eines Positionsgebers (100) für eine elektronische Positionsmesseinrichtung (1000), wobei der Positionsgeber (100) mittels einer Signalerzeugungseinrichtung (110) ein periodisches magnetisches Signal (S) erzeugt und eine elektrische Energieversorgungseinrichtung (120) die Signalerzeugungseinrichtung (110) mit elektrischer Energie versorgt, wobei der Positionsgeber (100) mindestens einen lokalen Energiespeicher (122) und einen Energiewandler (124) mit einer Empfangsspule zur Aufnahme von Energie aus einem Induktionsfeld aufweist, wobei die Energieversorgungseinrichtung (120) einen Gleichrichter zum Aufladen des lokalen Energiespeichers (122) mit einer Gleichspannung aufweist, und wobei der Positionsgeber (100) eine in der Empfangsspule induzierte Spannung mittels des Gleichrichters gleichrichtet und den lokalen Energiespeicher (122) mit einer durch den Gleichrichter erzeugten Gleichspannung auflädt, wobei die Signalerzeugungseinrichtung (110) wenigstens einen aktiven Oszillator aufweist, der zur Energieversorgung die Gleichspannung aus dem lokalen Energiespeicher (122) als Eingangsspannung erhält und aktiv in dem Positionsgeber das periodische magnetische Signal (S) erzeugt.

11. Verfahren nach Anspruch 10, wobei der Energiewandler (124) Energie aus einem Induktionsfeld einer Frequenz von etwa 1 MHz bis etwa 4 MHz bezieht.

12. Verfahren zum Betreiben einer Positionsmesseinrichtung (1000) zur Ermittlung einer Position (x) eines entlang eines Messweges (MW) bewegbaren, nach einem der Ansprüche 1 bis 5 ausgebildeten Positionsgebers (100), wobei die Positionsmesseinrichtung (1000) mindestens eine erste entlang des Messweges (MW) angeordnete Leiterschleife (L1) zur Erfassung eines von dem Positionsgeber (100) erzeugten magnetischen Signals (S) aufweist, wobei die erste Leiterschleife (L1) so ausgebildet ist, dass sich eine magnetische Kopplung zwischen einer Signalerzeugungseinrichtung (110) des Positionsgebers (100) und der ersten Leiterschleife (L1) in Abhängigkeit der Position (x) des Positionsgebers (100) ändert, und wobei eine Auswerteeinrichtung (1010) die Position (x) in Abhängigkeit eines durch das magnetische Signal (S) in der ersten Leiterschleife (L1) erzeugten ersten Signals (s1) ermittelt, und wobei die Positionsmesseinrichtung (1000) wenigstens eine Induktionsspule zur Erzeugung des Induktionsfelds für den Positionsgeber (100) aufweist und damit ein Induktionsfeld zur elektrischen Energieversorgung des Positionsgebers (100) erzeugt.

13. Verfahren nach Anspruch 12, wobei ferner eine zweite zumindest abschnittsweise entlang des Messweges (MW) angeordnete Leiterschleife (L2) zur Erfassung des von dem Positionsgeber (100) erzeugten magnetischen Signals (S) vorgesehen ist, wobei die Auswerteeinrichtung (1010) die Position (x) in Abhängigkeit des ersten Signals (s1) und eines durch das magnetische Signal (S) in der zweiten Leiterschleife (L2) erzeugten zweiten Signals (s2) ermittelt, wobei vorzugsweise mindestens ein Abschnitt der ersten Leiterschleife (L1) einen im wesentlichen etwa sinusförmigen Verlauf bezogen auf eine Referenzposition (x0) des Messweges (MW) und mindestens ein Abschnitt der zweiten Leiterschleife (L2) einen im wesentlichen etwa cosinusförmigen Verlauf bezogen auf die Referenzposition (x0) des Messweges (MW) aufweist.

14. Verfahren nach einem der Ansprüche 12 bis 13, wobei wenigstens eine Leiterschleife (L1) so ausgebildet ist, dass sich die Größe eines differentiellen Flächenelements (dA) der wenigstens einen Leiterschleife (L1) entlang einer Koordinatenachse (x) des Messweges (MW) gemäß einer vorgebbaren Funktion ändert.

15. Verfahren nach Anspruch 14, wobei wenigstens drei Leiterschleifen (L1, L2, L3) vorgesehen sind, wobei eine der ersten Leiterschleife (L1) zugeordnete Funktion eine Sinusfunktion ist, wobei eine der zweiten Leiterschleife (L2) zugeordnete Funktion eine Cosinusfunktion ist, und wobei eine der dritten Leiterschleife (L3) zugeordnete Funktion eine Konstante ist, und wobei die Auswerteeinrichtung (1010) die Position (x) in Abhängigkeit des ersten Signals (s1) und eines durch das magnetische Signal (S) in der zweiten Leiterschleife (L2) erzeugten zweiten Signals (s2) und eines durch das magnetische Signal (S) in der dritten Leiterschleife (L3) erzeugten dritten Signals (s3) ermittelt.

16. Verfahren nach Anspruch 15, wobei das zweite Signal (s2) um 90 Grad phasenverschoben wird, um ein phasenverschobenes zweites Signal (s2') zu erhalten, wobei das erste Signal (s1) zu dem phasenverschobenen zweiten Signal (s2') addiert wird, um ein Summensignal (s4) zu erhalten, und wobei ein Phasenvergleich zwischen dem Summensignal (s4) und dem dritten Signal (s3) ausgeführt wird, um die Position (x) zu ermitteln.

17. Verfahren nach Anspruch 16, wobei der Phasenvergleich die folgenden Schritte aufweist: Umwandeln des Summensignals (s4) in ein erstes Digitalsignal, Umwandeln des dritten Signals (s3) in ein zweites Digitalsignal, Vergleichen der Phasen des ersten und zweiten Digitalsignals im Wege einer Zeitmessung, um die Position (x) zu ermitteln.

18. Verfahren nach wenigstens einem der Ansprüche 12 bis 17, wobei das Induktionsfeld eine Frequenz von etwa 1 MHz oder mehr aufweist.

## Claims

1. Encoder (100) for an electronic position measuring device (1000), wherein the encoder (100) has a signal generating device (110) for generating a periodic magnetic signal (S) and an electrical energy supply device (120) for supplying the signal generating device (110) with electrical energy, wherein the encoder (100) has at least one local energy storage device (122) and an energy converter (124) with a receiver coil for receiving energy from an induction field, wherein the energy supply device (120) has a rectifier for charging the local energy storage device (122) with a direct voltage, and wherein the encoder (100) is configured to rectify a voltage induced in the receiver coil by means of the rectifier and to charge the local energy storage device (122) with a direct voltage generated by the rectifier, wherein the signal generating device (110) has at least one active oscillator which, for energy supply, receives the direct voltage from the local energy storage device (122) as input voltage and is configured to actively generate the periodic magnetic signal (S) in the encoder.

2. Encoder (100) according to claim 1, wherein the at least one local energy storage device (122) comprises a condenser and/or a battery and/or an accumulator.

3. Encoder (100) according to one of the preceding claims, wherein the energy converter (124) is configured to draw energy from an induction field with a frequency from around 1 MHz to around 4 MHz.

4. Encoder (100) according to one of the preceding claims, wherein the periodic signal (S) has a frequency component within the range from around one kilohertz to around 200 kilohertz, in particular within the range from around 10 kilohertz to around 20 kilohertz.

5. Encoder (100) according to claim 4, wherein the periodic signal (S) has exactly one frequency component within the range from around one kilohertz to around 200 kilohertz, in particular within the range from around 10 kilohertz to around 20 kilohertz.

6. Position measuring device (1000) with an encoder (100), configured according to one of the preceding claims, which is moveable in order to determine a position (x) along a measuring path (MW), wherein the position measuring device (1000) comprises: at least one first conductor loop (L1) arranged along the measuring path (MW) for detecting a magnetic signal (S) generated by the encoder (100), wherein the first conductor loop (L1) is configured such that a magnetic coupling between a signal generating device (110) of the encoder (100) and the first conductor loop (L1) changes as a function of the position (x) of the encoder (100), and an evaluating device (1010) for determining the position (x) as a function of a first signal (s1) generated in the first conductor loop (L1) by the magnetic signal (S), wherein the position measuring device (1000) has at least one induction coil for generating the induction field for the encoder (100).

7. Position measuring device (1000) according to claim 6, wherein a second conductor loop (L2), arranged at least in sections along the measuring path (MW), is further provided to detect the magnetic signal (S) generated by the encoder (100), wherein the evaluating device (1010) is configured to determine the position (x) as a function of the first signal (s1) and of a second signal (s2) generated by the magnetic signal (S) in the second conductor loop (L2), and wherein preferably at least one section of the first conductor loop (L1) has a substantially for example sinusoidal path in relation to a reference position (x0) of the measuring path (MW) and at least one section of the second conductor loop (L2) has a substantially for example cosinusoidal path in relation to the reference position (x0) of the measuring path (MW).

8. Position measuring device (1000) according to one of the claims 6 to 7, wherein at least one conductor loop (L1) is configured such that the size of a differential area element (dA) of the at least one conductor loop (L1) changes along a coordinate axis (x) of the measuring path (MW) according to a predeterminable function.

9. Position measuring device (1000) according to claim 8, wherein at least three conductor loops (L1, L2, L3) are provided, wherein a function assigned to the first conductor loop (L1) is a sine function, wherein a function assigned to the second conductor loop (L2) is a cosine function, and wherein a function assigned to the third conductor loop (L3) is a constant.

10. Method for operating an encoder (100) for an electronic position measuring device (1000), wherein the encoder (100) generates a periodic magnetic signal (S) by means of a signal generating device (110) and an electrical energy supply device (120) supplies the signal generating device (110) with electrical energy, wherein the encoder (100) has at least one local energy storage device (122) and an energy converter (124) with a receiver coil for receiving energy from an induction field, wherein the energy supply device (120) has a rectifier for charging the local energy storage device (122) with a direct voltage, and wherein the encoder (100) rectifies a voltage induced in the receiver coil by means of the rectifier and charges the local energy storage device (122) with a direct voltage generated by the rectifier, wherein the signal generating device (110) has at least one active oscillator which for energy supply receives the direct voltage from the local energy storage device (122) as input voltage and actively generates the periodic magnetic signal (S) in the encoder.

11. Method according to claim 10, wherein the energy converter (124) draws energy from an induction field with a frequency from around 1 MHz to around 4 MHz.

12. Method for operating a position measuring device (1000) for determining a position (x) of an encoder (100), moveable along a measuring path (MW), configured according to one of the claims 1 to 5, wherein the position measuring device (1000) has at least one first conductor loop (L1) arranged along the measuring path (MW) for detecting a magnetic signal (S) generated by the encoder (100), wherein the first conductor loop (L1) is configured such that a magnetic coupling between a signal generating device (110) of the encoder (100) and the first conductor loop (L1) changes as a function of the position (x) of the encoder (100), and wherein an evaluating device (1010) determines the position (x) as a function of a first signal (s1) generated in the first conductor loop (L1) by the magnetic signal (S), and wherein the position measuring device (1000) has at least one induction coil for generating the induction field for the encoder (100) and thus generates an induction field for the electrical energy supply of the encoder (100).

13. Method according to claim 12, wherein a second conductor loop (L2), arranged at least in sections along the measuring path (MW), is further provided to detect the magnetic signal (S) generated by the encoder (100), wherein the evaluating device (1010) determines the position (x) as a function of the first signal (s1) and of a second signal (s2) generated by the magnetic signal (S) in the second conductor loop (L2), wherein preferably at least one section of the first conductor loop (L1) has a substantially for example sinusoidal path in relation to a reference position (x0) of the measuring path (MW) and at least one section of the second conductor loop (L2) has a substantially for example cosinusoidal path in relation to the reference position (x0) of the measuring path (MW).

14. Method according to one of the claims 12 to 13, wherein at least one conductor loop (L1) is configured such that the size of a differential area element (dA) of the at least one conductor loop (L1) changes along a coordinate axis (x) of the measuring path (MW) according to a predeterminable function.

15. Method according to claim 14, wherein at least three conductor loops (L1, L2, L3) are provided, wherein a function assigned to the first conductor loop (L1) is a sine function, wherein a function assigned to the second conductor loop (L2) is a cosine function, and wherein a function assigned to the third conductor loop (L3) is a constant, and wherein the evaluating device (1010) determines the position (x) as a function of the first signal (s1) and of a second signal (s2) generated by the magnetic signal (S) in the second conductor loop (L2) and of a third signal (s3) generated by the magnetic signal (S) in the third conductor loop (L3).

**16.** Method according to claim 15, wherein the second signal (s2) is phase-shifted by 90 degrees in order to obtain a phase-shifted second signal (s2'), wherein the first signal (s1) is added to the phase-shifted second signal (s2') in order to obtain a sum signal (s4), and wherein a phase comparison between the sum signal (s4) and the third signal (s3) is carried out in order to determine the position (x).

**17.** Method according to claim 16, wherein the phase comparison comprises the following steps: converting the sum signal (s4) into a first digital signal, converting the third signal (s3) into a second digital signal, comparing the phases of the first and second digital signal by way of a time measurement in order to determine the position (x).

**18.** Method according to at least one of the claims 12 to 17, wherein the induction field has a frequency of around 1 MHz or more.

**Revendications**

**1.** Transmetteur de position (100) pour un dispositif électronique de mesure de position (1000), dans lequel le transmetteur de position (100) présente un dispositif générateur de signal (110) pour générer un signal magnétique périodique (S) et un dispositif d'alimentation électrique (120) pour alimenter le dispositif générateur de signal (110) en énergie électrique, dans lequel le transmetteur de position (100) présente au moins un accumulateur d'énergie local (122) et un convertisseur d'énergie (124) muni d'une bobine réceptrice pour recevoir de l'énergie issue d'un champ d'induction, dans lequel le dispositif d'alimentation (120) comprend un redresseur pour charger l'accumulateur d'énergie local (122) avec une tension continue, et dans lequel le transmetteur de position (100) est conçu pour redresser une tension induite dans la bobine réceptrice au moyen du redresseur et pour charger l'accumulateur d'énergie local (122) avec une tension continue générée par le redresseur, dans lequel le dispositif générateur de signal (110) présente au moins un oscillateur actif qui reçoit sous la forme d'une tension d'entrée la tension continue issue de l'accumulateur d'énergie local (122) pour l'alimentation en énergie et est conçu pour générer de manière active le signal magnétique périodique (S) dans le transmetteur de position.

**2.** Transmetteur de position (100) selon la revendication 1, dans lequel le au moins un accumulateur d'énergie local (122) comprend un condensateur et/ou une batterie et/ou un accumulateur.

**3.** Transmetteur de position (100) selon l'une quelconque des revendications précédentes, dans lequel le convertisseur d'énergie (124) est conçu pour accepter de l'énergie issue d'un champ d'induction d'une fréquence comprise entre environ 1 MHz et environ 4 MHz.

**4.** Transmetteur de position (100) selon l'une quelconque des revendications précédentes, dans lequel le signal périodique (S) présente une composante de fréquence située dans la plage comprise entre environ 1 kilohertz et environ 200 kilohertz, en particulier dans la plage comprise entre environ 10 kilohertz et environ 20 kilohertz.

**5.** Transmetteur de position (100) selon la revendication 4, dans lequel le signal périodique (S) présente de manière précise une composante de fréquence située dans la plage comprise entre environ 1 kilohertz et environ 200 kilohertz, en particulier dans la plage comprise entre environ 10 kilohertz et environ 20 kilohertz.

**6.** Dispositif de mesure de position (1000) avec un transmetteur de position (100) selon l'une quelconque des revendications précédentes, mobile le long d'un trajet de mesure (MW) pour déterminer une position (x), dans lequel le dispositif de mesure de position (1000) présente: au moins une première boucle conductrice (L1) agencée le long du trajet de mesure (MW) pour détecter un signal magnétique (S) généré par le transmetteur de position (100), dans lequel la première boucle conductrice (L1) est conçue de sorte qu'un couplage magnétique entre un dispositif générateur de signal (110) du transmetteur de position (100) et la première boucle conductrice (L1) se modifie en fonction de la position (x) du transmetteur de position (100), et un dispositif d'évaluation (1010) pour déterminer la position (x) en fonction d'un premier signal (s1) généré par le signal magnétique (S) dans la première boucle conductrice (L1), dans lequel le dispositif de mesure de position (1000) présente au moins une bobine d'induction pour générer le champ d'induction pour le transmetteur de position (100).

**7.** Dispositif de mesure de position (1000) selon la revendication 6, dans lequel une deuxième boucle conductrice (L2) agencée au moins par sections le long du trajet de mesure (MW) est en outre prévue pour détecter le signal magnétique (S) généré par le transmetteur de position (100), dans lequel le dispositif d'évaluation (1010) est conçu pour déterminer la position (x) en fonction du premier signal (s1) et d'un deuxième signal (s2) généré par le signal magnétique (S) dans la deuxième boucle conductrice (L2), et dans lequel de manière préférée au moins une section de la première boucle conductrice (L1) présente un tracé essentiellement approximativement sinusoïdal par rapport à une position de référence (x0) du trajet de mesure (MW) et au moins une section de la deuxième boucle conductrice (L2) présente un tracé essentiellement approximativement cosinusoïdal par rapport à la position de référence (x0) du trajet de mesure (MW).

8. Dispositif de mesure de position (1000) selon l'une quelconque des revendications 6 à 7, dans lequel au moins une boucle conductrice (L1) est conçue de sorte que la taille d'un élément de surface différentiel (dA) de la au moins une boucle conductrice (L1) le long d'un axe de coordonnées (x) du trajet de mesure (MW) se modifie conformément à une fonction pouvant être prédéfinie.

9. Dispositif de mesure de position (1000) selon la revendication 8, dans lequel au moins trois boucles conductrices (L1, L2, L3) sont prévues, dans lequel une fonction associée à la première boucle conductrice (L1) est une fonction sinus, dans lequel une fonction associée à la deuxième boucle conductrice (L2) est une fonction cosinus, et dans lequel une fonction associée à la troisième boucle conductrice (L3) est une constante.

10. Procédé d'exploitation d'un transmetteur de position (100) pour un dispositif électronique de mesure de position (1000), dans lequel le transmetteur de position (100) génère un signal magnétique périodique (S) au moyen d'un dispositif générateur de signal (110) et un dispositif d'alimentation électrique (120) alimente le dispositif générateur de signal (110) en énergie électrique, dans lequel le transmetteur de position (100) présente au moins un accumulateur d'énergie local (122) et un convertisseur d'énergie (124) avec une bobine réceptrice pour recevoir de l'énergie d'un champ d'induction, dans lequel le dispositif d'alimentation (120) présente un redresseur pour charger l'accumulateur d'énergie local (122) avec une tension continue, et dans lequel le transmetteur de position (100) redresse une tension induite dans la bobine de réception au moyen du redresseur et charge l'accumulateur d'énergie local (122) avec une tension continue générée par le redresseur, dans lequel le dispositif générateur de signal (110) présente au moins un oscillateur actif qui reçoit sous la forme d'une tension d'entrée la tension continue issue de l'accumulateur d'énergie local (122) pour l'alimentation en énergie et génère de manière active le signal magnétique périodique (S) dans le transmetteur de position.

11. Procédé selon la revendication 10, dans lequel le convertisseur d'énergie (124) accepte de l'énergie issue d'un champ d'induction d'une fréquence comprise entre environ 1 MHz et environ 4 MHz.

12. Procédé d'exploitation d'un dispositif de mesure de position (1000) pour déterminer une position (x) d'un transmetteur de position (100) selon l'une quelconque des revendications 1 à 5 mobile le long d'un trajet de mesure (MW) pour déterminer une position (x), dans lequel le dispositif de mesure de position (1000) présente au moins une première boucle conductrice (L1) agencée le long du trajet de mesure (MW) pour détecter un signal magnétique (S) généré par le transmetteur de position (100), dans lequel la première boucle conductrice (L1) est conçue de sorte qu'un couplage magnétique entre un dispositif générateur de signal (110) du transmetteur de position (100) et la première boucle conductrice (L1) se modifie en fonction de la position (x) du transmetteur de position (100), et dans lequel un dispositif d'évaluation (1010) détermine la position (x) en fonction d'un premier signal (s1) généré par le signal magnétique (S) dans la première boucle conductrice (L1), et dans lequel le dispositif de mesure de position (1000) présente au moins une bobine d'induction pour générer le champ d'induction pour le transmetteur de position (100) et génère ainsi un champ d'induction pour alimenter en énergie électrique le transmetteur de position (100).

13. Procédé selon la revendication 12, dans lequel une deuxième boucle conductrice (L2) agencée au moins par sections le long du trajet de mesure (MW) est en outre prévue pour détecter le signal magnétique (S) généré par le transmetteur de position (100), dans lequel le dispositif d'évaluation (1010) détermine la position (x) en fonction du premier signal (s1) et d'un deuxième signal (s2) généré par le signal magnétique (S) dans la deuxième boucle conductrice (L2), dans lequel de manière préférée au moins une section de la première boucle conductrice (L1) présente un tracé essentiellement approximativement sinusoïdal par rapport à une position de référence (x0) du trajet de mesure (MW) et au moins une section de la deuxième boucle conductrice (L2) présente un tracé essentiellement approximativement cosinusoïdal par rapport à la position de référence (x0) du trajet de mesure (MW).

14. Procédé selon l'une quelconque des revendications 12 à 13, dans lequel au moins une boucle conductrice (L1) est conçue de sorte que la taille d'un élément de surface différentiel (dA) de la au moins une boucle conductrice (L1) le long d'un axe de coordonnées (x) du trajet de mesure (MW) se modifie conformément à une fonction pouvant être prédéfinie.

**15.** Procédé selon la revendication 14, dans lequel au moins trois boucles conductrices (L1, L2, L3) sont prévues, dans lequel une fonction associée à la première boucle conductrice (L1) est une fonction sinus, dans lequel une fonction associée à la deuxième boucle conductrice (L2) est une fonction cosinus, et dans lequel une fonction associée à la troisième boucle conductrice (L3) est une constante, et dans lequel le dispositif d'évaluation (1010) détermine la position (x) en fonction du premier signal (s1) et d'un deuxième signal (s2) généré par le signal magnétique (S) dans la deuxième boucle conductrice (L2) et d'un troisième signal (s3) généré par le signal magnétique (S) dans la troisième boucle conductrice (L3).

**16.** Procédé selon la revendication 15, dans lequel le deuxième signal (s2) est déphasé de 90 degrés pour obtenir un deuxième signal (s2') déphasé, dans lequel le premier signal (s1) est ajouté au deuxième signal (s2') déphasé pour obtenir un signal de somme (s4), et dans lequel une comparaison de phase entre le signal de somme (s4) et le troisième signal (s3) est mise en oeuvre pour déterminer la position (x).

**17.** Procédé selon la revendication 16, dans lequel la comparaison de phase comprend les étapes consistant à: convertir le signal de somme (s4) en un premier signal numérique, convertir le troisième signal (s3) en un deuxième signal numérique, comparer les phases des premier et deuxième signaux numériques au moyen d'un chronométrage pour déterminer la position (x).

**18.** Procédé selon au moins l'une quelconque des revendications 12 à 17, dans lequel le champ d'induction présente une fréquence supérieure ou égale à environ 1 MHz.

Fig. 1

Fig. 2

Fig. 3

Fig. 4

## Fig. 5a

## Fig. 5b

Fig. 6

# Fig. 7

210      100      220

$$\boxed{\phantom{xxx}} \xRightarrow{\;E\;} \boxed{\phantom{xxx}} \xRightarrow{\;S\;} \boxed{\phantom{xxx}}$$

# Fig. 8

1010

1014     1016

s1

1012

s2   s2'

s4

s3

x

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1442273 B1
- EP 0743508 A2
- DE 69502283 T2
- EP 0658745 A2